# EUROPEAN PATENT APPLICATION

(11) **EP 1 933 028 A1**
(43) Date of publication of application: **18.06.2008**
(21) Application number: 06819983.5
(22) Date of filing: 15.09.2006
(51) Int. Cl.: F03D 3/00

(54) **WIND GENERATOR**

(30) Priority: 15.09.2005 ES 200502290; 06.09.2006 ES 200602289
(71) Applicant: MARTINEZ PENADES, Bernardo, 02660 Caudete (Albacete) (ES)
(72) Inventor: MARTINEZ PENADES, Bernardo, 02660 Caudete (Albacete) (ES)
(74) Representative: Ungria Lopez, Javier
(86) International application number: PCT/ES2006/000519
(87) International publication number: WO 2007/034014

(57) **Abstract**

Comprising a tower (1) and a set of vertical blades (4) which rotate around the tower (1) and which in turn rotate about themselves on a shaft (5) in order to face the direction of the wind (6) during the angular displacement that favours the rotation of the blades (4) around the tower (1) and in order to locate them parallel to the direction of the wind (6) during the rest of the angular displacement, reducing the braking of the blades when passing from their position parallel to the wind direction to the position facing it. The blades (4) comprise means (11-13) of suppression of the surface of the blade when it passes from the parallel position to the position facing the direction of the wind (6), minimising the braking which the blade produces during the change of said position. It permits maximum efficiency to be obtained with both weak and strong winds.

## Description

### OBJECT OF THE INVENTION

The present invention relates to a wind generator that includes vertical blades which rotate around the tower and which also rotate about themselves with the aim of having them facing the wind during the angular displacement that favours the rotation of the blades around the tower, and to locate them parallel to the wind during the rest of the angular displacement, in such a way that reduces the braking of the rotation which the blades produce during the angular displacement when they are not facing the wind.

Another object of the invention is to provide means of suppression of the surface of the blades when they pass through the position parallel to the wind to the position facing the same, in such a way that during that change of direction the braking which the blades produce during that transition is also minimised, such that maximum efficiency is obtained from the wind generator.

### PRIOR ART OF THE INVENTION

The use of wind generators or aero-generators is widely known in the state of the art. They comprise a tower the upper part of which is provided with a perpendicular shaft supporting a set of blades that cause the shaft to turn, as a result of which electrical energy is obtained.

More specifically, the rotating shaft is mounted in a rotary structure supported at the upper end of the tower which permits the blades to orientate themselves in order to face the direction of the wind so that rotation is produced even though the direction of the wind changes.

This type of generator presents the drawback that when the wind is strong the rotation of the blades has to be halted in order to prevent them from breaking, and on the other hand, when the wind is weak no rotation of the blades is achieved.

### DESCRIPTION OF THE INVENTION

In order to solve the drawbacks stated above, the invention has developed a novel wind generator which, as with those of the state of the art, provides for the use of a tower and a set of blades; and is characterised in that the blades are vertical for which it comprises means of attachment of the vertical blades to the tower and means of rotation of said vertical blades about themselves, in such a way that, unlike in the state of the art, the blades rotate around the tower and furthermore, as they rotate about themselves, this permits them to face the direction of the wind during the angular displacement that favours the rotation of the blades around the tower, and at the same time it permits the vertical blades to be located parallel to the direction of the wind during the rest of the angular displacement, such that the braking of the rotation that is produced is reduced.

Moreover, the invention provides for the incorporation of means of suppression of the vertical blades when they pass from the parallel position to the position facing the direction of the wind, in such a way that this novel characteristic minimises the braking which each vertical blade produces during that change of position.

The configuration described permits the efficiency of the wind generator to be improved considerably, and it also allows its application both when the wind is weak and in regions where winds are strong, by permitting the rotation of the blades about themselves to be regulated and their surface to be varied, which allows them to be coupled to the needs of each moment.

Consequently, the invention functions in a wider margin of wind speeds than the wind generators of the state of the art.

The means of attachment of the vertical blades to the tower comprise one or more arms and guys which maintain the vertical position of the blade.

The means of rotation of the blades around the tower are provided with at least one bearing integral with one of the ends of the arm or arms and with the tower.

Referring to the means of rotation of the blades about themselves, these consist of a vertical shaft of the blade about which the latter rotates, which is attached to the other end of the arm or arms in a rotary manner, said means of rotation of the blades about themselves furthermore comprising means of positioning of the blades as a function of the wind direction and speed, in order to position them in such a way as to obtain maximum efficiency.

The surface of the blades is interrupted in the zone of attachment of one of the ends of the arm or arms with the vertical shaft of the blade, in order to permit rotation about its vertical shaft. Said rotation of the blades about themselves lies between 0° and 90° such that they are located in the right position for permanently exploiting the wind, facing it in the angular displacement during which rotation around the tower is favoured, and being located parallel to the wind direction during the rest of the path of angular rotation in order to prevent braking of the rotation from taking place, as was described earlier.

The means of suppression of the surface of the blade when it passes from the parallel position to the position facing the wind direction comprise a set of rotary slats, which can be vertical slats, horizontal slats, oblique slats or combination of them.

Furthermore, the invention provides that the means of suppression of the surface of the blade when it passes from the parallel position to the position facing the wind direction can consist of at least one retractable zone in a fixed zone, in such a way that a blockable window is defined.

The invention also provides that the retractable zone can consist of a set of retractable segments.

Consequently, the configuration described permits the maximum efficiency of the inventive wind generator to be obtained at any moment, by permitting the blades to rotate about themselves and by permitting the surface of them to vary when they pass from the parallel position to the position facing the wind direction.

Below, in order to facilitate a better understanding of this specification and forming an integral part thereof, some figures are attached in which, on an illustrative rather than limiting basis, the inventive object has been represented.

### BRIEF DESCRIPTION OF THE FIGURES

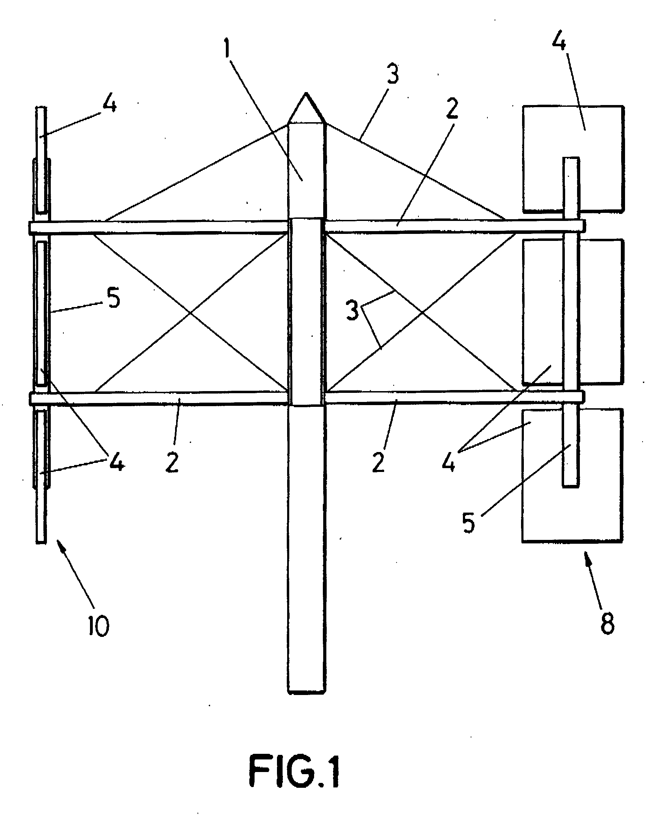

**Figure 1****.-** Shows a schematic view in elevation according to an example of embodiment of the inventive wind generator.
**Figure 2****.-** Shows a schematic view in plan of the functioning of the wind generator represented in the previous figure.
**Figure 3****.-** Shows an elevation view of a possible example of embodiment of the blades of the wind generator, which comprises a set of vertical slats, which are rotated in order to offer less resistance to the wind when the blades change from their position parallel to the wind to the position facing it.
**Figure 4****.-** Shows a view of another possible example of embodiment of the inventive blades.
**Figure 5****.-** Shows a view according to a transverse cross-section of the blades of the previous figure.

### DESCRIPTION OF THE PREFERRED FORM OF EMBODIMENT

A description of the invention is made forthwith, based on the figures commented on above.

The inventive wind generator comprises a tower 1 to which are attached by means of some arms 2 and guys 3 some vertical blades 4, in such a way that the latter can rotate around the tower 1 in order to produce energy and at the same time each one of said vertical blades 5 can rotate about its own shaft 5 in order to permit it to be orientated with respect to the wind 6 according to the angular position of the former with respect to the latter, as will be described further below.

The shaft 5 of the vertical blades 4 is a central vertical shaft of the blade 4, which is interrupted in the zone of attachment with each of the arms 2 in order to permit the blade to rotate about its shaft 5.

Moreover, in order to permit rotation to be effected of the arms 2 around the tower 1, provision is made for the attachment to be carried out by means of at least one bearing permitting that rotation to be performed.

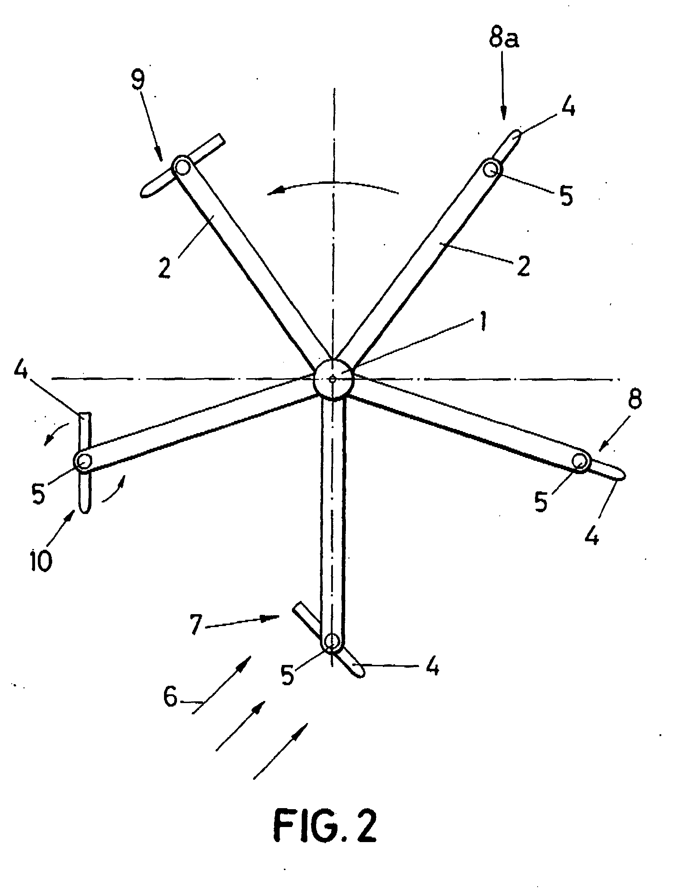

The functioning of the invention is explained below with the aid of figure 2.

At point 8, the vertical blade 4 has to be facing the wind direction 6, so that the latter can push the vertical blade 4 producing rotation of it around the tower 1. As this rotation takes place, the rotation of the vertical blade 4 about its shaft 5 is simultaneously carried out in order to keep it orientated to the direction of the wind 6, until the blade 4 is aligned with the arms 2, as occurs when it arrives at position 8, which position is maintained until point 8a, starting from which the blade 4 has to rotate about its shaft 5 in order to be located parallel to the wind direction 6, in such a way that it offers the least possible resistance to it, thus reducing the braking of the rotation produced by the vertical blades 4 around the tower 1. When the vertical blades 4 are in position 9, these are arranged perpendicular to the arms 2.

From point 9 as far as point 7, passing through 10, the vertical blade 4 must again be orientated in the direction of the wind 6 in order to perform a new turn.

For this, the means of rotation of the vertical blades about themselves comprise means of positioning of the vertical blades as a function of the wind direction, as has been described in order to have them facing the wind or be located parallel to it.

When the vertical blade 4 passes from point 9 as far as 7, passing through point 10, so that the blade is again orientated in the direction of the wind 6, this can cause braking of the rotation of the vertical blades around the tower 1, which leads to a lower efficiency of the inventive wind generator, for which the invention provides that the vertical blades 4 are endowed with means of suppression of the surface of the blade when these pass from position 9 to position 7, in such a way that they offer less resistance to the wind and consequently minimise the braking of the blades during the angular displacement from position 9 as far as 7.

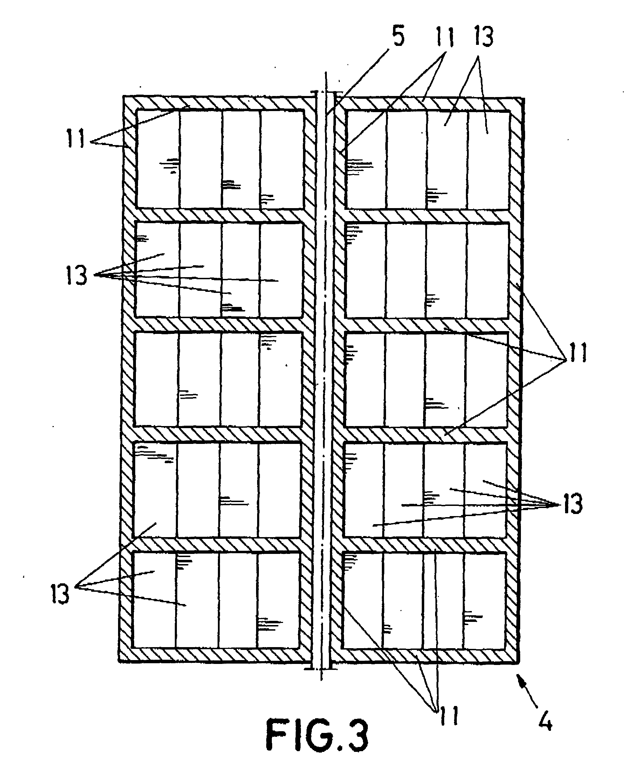

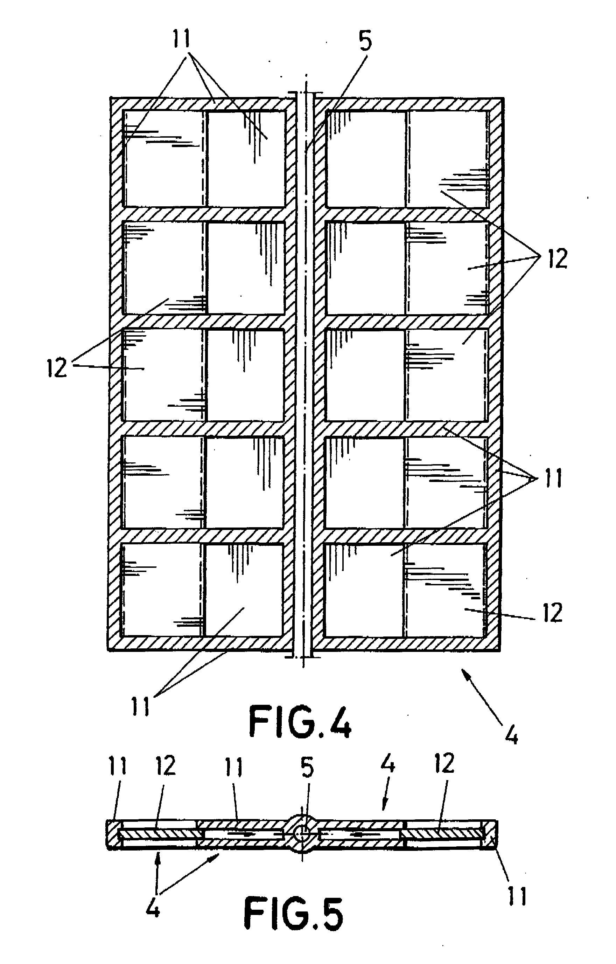

To achieve this the invention basically provides two different solutions represented in figures 3 to 5.

The solution of figure 3 provides for the vertical blades 4 to consist of a frame or fixed part 11 in which a set of rotary slats 13 are arranged orientated in such a way that they remain located parallel to the direction of the wind in the trajectory from position 9 to position 7, so that these slats 13 progressively rotate to the degree that the blades advance, keeping them parallel to the direction of the wind 6.

The slats of figure 3 have been arranged in the vertical direction, though they can equally well be arranged in any other direction according to the required needs.

The second solution provided by the invention consists of endowing the vertical blades 4 with a retractable zone 12 which is hidden behind the zones of the frame or fixed part 11 in order to define a blockable window so that, from position 9 to position 7 the opening of the window takes place with which less resistance to the wind is offered, minimising the braking action of the wind generator during the angular displacement of the vertical blades 4 from position 9 to position 7.

Consequently, by means of the invention a greater efficiency of the wind generator is achieved.

In the example of embodiment, the opening of the retractable zones 12 is carried out in the transverse direction, though it can just as well be done in the longitudinal direction or any other that is required according to the needs of the invention.

Each one of the retractable zones 12 can be divided into a set of retractable segments (not represented) which are hidden on the fixed zones 11.

Finally, it can be pointed out that, depending on the wind speed, the invention provides for governing the means of suppression of the surface of the blade, as well as the angular position of the blade on its shaft 5, in order to obtain the maximum efficiency.

## Claims

1. **WIND GENERATOR,** which comprises a tower (1) and rotating blades; it is **characterised in that** the blades are vertical blades (4) and it also comprises means of rotation of the vertical blades (4) around the tower (1), and means of rotation of the vertical blade (4) about themselves, in order to have them facing the direction of the wind (6) during the angular displacement that favours the rotation of the vertical blades (4) around the tower (1), and in order to locate them parallel to the direction of the wind (6) during the rest of the angular displacement, reducing the braking of the rotation that is produced.

2. **WIND GENERATOR,** according to claim 1, **characterised in that** the vertical blades (4) include means of suppression of the surface of the vertical blades (4) when they pass from the parallel position to the position facing the direction of the wind (6), in order to minimise the braking which each vertical blade (4) produces during that change of position.

3. **WIND GENERATOR**, according to claim 1, **characterised in that** the means of attachment of the vertical blades (4) to the tower (1) comprise at least one arm (2) and guys (3).

4. **WIND GENERATOR**, according to claim 3, **characterised in that** the means of rotation of the vertical blades (4) around the tower (1) comprise at least one bearing integral with one of the ends of the at least one arm (2) and of the tower (1).

5. **WIND GENERATOR,** according to claim 1, **characterised in that** the means of rotation of the blades about themselves comprise a vertical shaft (5) about which the blade (4) rotates and which is attached to the other end of the at least one arm (2) in a rotary manner, furthermore comprising means of positioning of the vertical blades (4) as a function of the direction and speed of the wind (6).

6. **WIND GENERATOR**, according to the above claims, **characterised in that** the surface of the vertical blades (4) is interrupted in the zone of attachment of one of the ends of the at least one arm (2) with the vertical shaft (5) of the blade (4), in order to permit its rotation about said vertical shaft (5).

7. **WIND GENERATOR**, according to claim 6, **characterised in that** the rotation of the vertical blades (4) about themselves lies between 0° and 90°.

8. **WIND GENERATOR,** according to claim 1, **characterised in that** the means of suppression of the surface of the vertical blade (4) when it passes from the parallel position to the position facing the wind direction (6) comprise a set of rotary slats (13) selected from among vertical slats, horizontal slats, oblique slats and combination of them.

9. **WIND GENERATOR,** according to claim 1, **characterised in that** the means of suppression of the surface of the vertical blade (4) when it passes from the parallel position to the position facing the wind direction (6) comprise at least one retractable zone (12) in a fixed zone (11), in order to define a blockable window.

10. **WIND GENERATOR,** according to claim 9, **characterised in that** the retractable zone (12) comprises a set of retractable segments.
